# EUROPÄISCHE PATENTSCHRIFT

(11) **EP 1 985 159 B1**
(45) Veröffentlichungstag und Bekanntmachung des Hinweises auf die Patenterteilung: **04.11.2009**
(21) Anmeldenummer: 07704354.5
(22) Anmeldetag: 05.02.2007
(51) Int. Cl.: H05B 41/285, H02M 1/32, H02M 3/155, H02H 7/12

(54) **SCHALTUNGSANORDNUNG ZUR BEREITSTELLUNG EINER BETRIEBS-GLEICHSPANNUNG**
CIRCUIT ARRANGEMENT FOR PROVIDING AN OPERATING DC VOLTAGE
CIRCUIT DESTINE A FOURNIR UNE TENSION CONTINUE DE FONCTIONNEMENT

(30) Priorität: 13.02.2006 DE 102006006558
(43) Veröffentlichungstag der Anmeldung: 29.10.2008
(73) Patentinhaber: Osram Gesellschaft mit beschränkter Haftung, 81543 München (DE)
(72) Erfinder: STORM, Arwed, 85221 Dachau (DE)
(86) Internationale Anmeldenummer: PCT/EP2007/051070
(87) Internationale Veröffentlichungsnummer: WO 2007/093516

(56) Entgegenhaltungen:
- EP-A- 1 526 622
- DE-C1- 4 037 722
- PETERSEN L ET AL: "Reduction of voltage stresses in buck-boost-type power factor correctors operating in boundary conduction mode" APEC 2003. 18TH. ANNUAL IEEE APPLIED POWER ELECTRONICS CONFERENCE AND EXPOSITION. MIAMI BEACH, FL, FEB. 9 - 13, 2003, ANNUAL APPLIED POWER ELECTRONICS CONFERENCE, NEW YORK, NY : IEEE, US, Bd. VOL. 1 OF 2. CONF. 18, 9. Februar 2003 (2003-02-09), Seiten 664-670, XP010631581 ISBN: 0-7803-7768-0

## Beschreibung

### Technisches Gebiet

Die vorliegende Erfindung bezieht sich auf Schaltungsanordnungen zum Bereitstellen einer Betriebs-Gleichspannung aus einer Netzspannung. Insbesondere handelt es sich dabei um Betriebsschaltungen, die einen getakteten elektronischen Wandler enthalten. Solche Betriebsschaltungen werden bevorzugt für Lampen oder andere Lichtquellen eingesetzt. Die vorliegende Erfindung behandelt den Schutz derartiger Schaltungsanordnungen vor Netzüberspannung. Unter Netzüberspannung wird im folgenden eine transiente Überspannung verstanden, die zur Zerstörung der Schaltungsanordnung führen kann. Nicht betrachtet werden dauerhaft überhöhte Werte für die Netzspannung über einem Nominalwert.

### Stand der Technik

Schaltungsanordnungen, die zum Anschluss an eine Netzspannung vorgesehen sind, sind durch Überspannungen gefährdet, die die Netzspannung aufweisen kann. Schaltungsanordnungen, die eine Betriebs-Gleichspannung bereitstellen, besitzen in der Regel einen Speicherkondensator, an dem die Betriebs-Gleichspannung für weitere Schaltungsteile bereit steht. Im Stand der Technik werden oft Schaltungstopologien verwendet, bei denen der Speicherkondensator ohne strombegrenzende Mittel wie z. B. Drosseln mit der Netzspannung gekoppelt ist. Falls der Speicherkondensator einen genügend großen Kapazitätswert aufweist, kann in diesem Fall der Speicherkondensator die Energie der Netzüberspannung aufnehmen, ohne Zerstörung der Schaltungsanordnung.

Weiterhin ist im Stand der Technik die Verwendung von Varistoren oder Suppressordioden, die bei Überschreiten einer vorgegebenen Spannung in einen leitenden Zustand übergehen und die Netzspannung begrenzen. Der Nachteil dieser Mittel liegt in der sicheren Begrenzung der Netzspannung bei starken Störungen der Netzspannung. Regelmäßig enthalten Betriebschaltungen für Lampen oder andere Schaltungsanordnungen zur Bereitstellung einer Gleichspannung mindestens einen Schalttransistor, dessen Spannungsfestigkeit begrenzt ist. Eine durch den Typ des Schalttransistors bedingte Maximalspannung darf am Schalttransistor nicht überschritten werden. Um dies auch bei stark gestörter Netzspannung sicher zu stellen, muss ein Varistor oder eine Suppressordiode entsprechend groß dimensioniert sein. Dies führt zu großen und teueren Varistoren oder Suppressordioden. Besser ist in diesem Fall die oben beschriebene Methode mit dem Speicherkondensator. Diese ist jedoch nicht anwendbar bei Schaltungstoplogien, bei denen der Speicherkondensator nicht direkt mit Netzspannung gekoppelt ist.

Weiterhin offenbart EP1526622 ein elektronischer Vorschaltgerät mit einer Schutzschaltung für Schalttransistors eines Wandlers.

### Darstellung der Erfindung

Der Erfindung liegt das technische Problem zugrunde, eine Schaltungsanordnung zur Verfügung zu stellen, die gegen Netzüberspannung geschützt ist, ohne die oben genannten Nachteile aufzuweisen.

Der Erfindung liegt die Erkenntnis zu Grunde, dass sich ein Speicherkondensator zur Begrenzung der Spannung an einem Schalttransistor nutzen lässt, indem ein Ableitschalter den Schalttransistor mit dem Speicherkondensator verbindet, falls eine Netzüberspannung vorliegt.

Im allgemeinen weist eine gattungsgemäße Schaltungsanordnung einen Gleichrichter auf, der an einem ersten und einem zweiten Netzanschluss eine gleichgerichtete Netzspannung zur Verfügung stellt. Ohne Begrenzung der Allgemeinheit wird der erste Netzanschluss als Bezugspotenzial verwendet. Die gleichgerichtete Netzspannung speist eine getaktete Wandlerschaltung, die meist an einem Speicherkondensator eine Betriebsgleichspannung zum Betrieb von weiteren Schaltungsteilen zur Verfügung stellt. Der Speicherkondensator stellt die Betriebsgleichspannung mit Bezug auf das Bezugspotenzial zur Verfügung. Der Speicherkondensator dient also meist als Puffer für die Betriebsgleichspannung und ist demnach in gattungsgemäßen Schaltungsanordnungen vorteilhaft bereits vorhanden, auch wenn die Schaltungsanordnung die vorliegende Erfindung nicht enthält. Bei der Realisierung der Erfindung muss aber nicht zwangsläufig ein bereits vorhandener Speicherkondensator herangezogen werden. Es kann für die Erfindung auch ein separater Speicherkondensator benutzt werden.

Die getaktete Wandlerschaltung umfasst mindestens einen Schalttransistor, der mit einem zweiten Arbeitsanschluss mit dem Bezugspotenzial gekoppelt ist. Tritt an den Netzanschlüssen eine Netzüberspannung auf, so kann zwischen dem zweiten Arbeitsanschluss des Schalttransistors und einem ersten Arbeitsanschluss des Schalttransistors ein Spannungswert auftreten, der zur Zerstörung des Schalttransistors führt.

Eine erfindungsgemäße Schaltungsanordnung umfasst einen Ableitschalter, der im Fall einer Netzüberspannung den ersten Arbeitsanschluss des Schalttransistors mit dem Speicherkondensator verbindet und dadurch einen Anstieg der Spannung am Schalttransistor auf zerstörende Werte verhindert.

Von besonderem Nutzen ist die Erfindung bei sog. Leistungsfaktorkorrekturschaltungen (PFC-Schaltungen, Power Factor Correction Circuits), die bei modernen Betriebsgeräten für Lampen häufig Verwendung finden. Sie sind an sich dem Fachmann bekannt und werden daher hier nicht im Einzelnen zu erläutert. Solche Leistungsfaktorkorrekturschaltungen enthalten neben einem Schalttransistor auch meist eine Speicherdrossel. In diesen Fällen ist der Schalttransistor auch durch Sättigungsströme der Speicherdrossel in Folge von transienten Störungen gefährdet.

Besonders bevorzugt ist die Anwendung der Erfindung bei sog. Abwärtswandlern (step-down-Konverter), die kleinere Spannungen als die Versorgungsspannungsamplitude erzeugen. Ein besonders bevorzugtes Beispiel, das sowohl als Aufwärtswandler als auch als Abwärtswandler arbeiten kann und damit im Sinn dieser Erfindung als Abwärtswandler betrachtet wird, ist ein SEPIC-Wandler. Auch das Prinzip des SEPIC-Wandlers soll hier nicht im Einzelnen erläutert werden. Stattdessen wird verwiesen auf die Literatur und beispielhaft auf die deutsche Patentanmeldung 101 10 239.9.

Ein weiterer Aspekt der vorliegenden Erfindung betrifft die Realisierung des Ableitschalters. Verteilhaft wird er mit einem Thyristor ausgeführt, der von einer Treiberschaltung getriggert wird, die ein Über-Kopf-Zünden des Thyristors unterbindet. Dies geschieht durch Anlegen einer negativen Spannung an das Gate des Thyristors, solange er nicht gezündet werden soll, wobei die negative Spannung aus einer Hilfsdrossel gewonnen wird, die mit der Speicherdrossel magnetisch gekoppelt ist.

### Kurze Beschreibung der Zeichnungen

- Fig. 1: zeigt ein Schaltbild einer erfindungsgegenständlichen Schaltungsanordnung.
- Fig. 2: zeigt ein Schaltbild für die Realisierung eines Ableitschalters, wie er für eine erfindungsgemäße Schaltungsanordnung geeignet ist.

Im folgenden werden Drosseln durch den Buchstaben L, Kondensatoren durch den Buchstaben C, Widerstände durch den Buchstaben R, Anschlüsse durch den Buchstaben J und Schalter durch den Buchstaben S jeweils gefolgt von einer Zahl beschrieben.

### Bevorzugte Ausführung der Erfindung

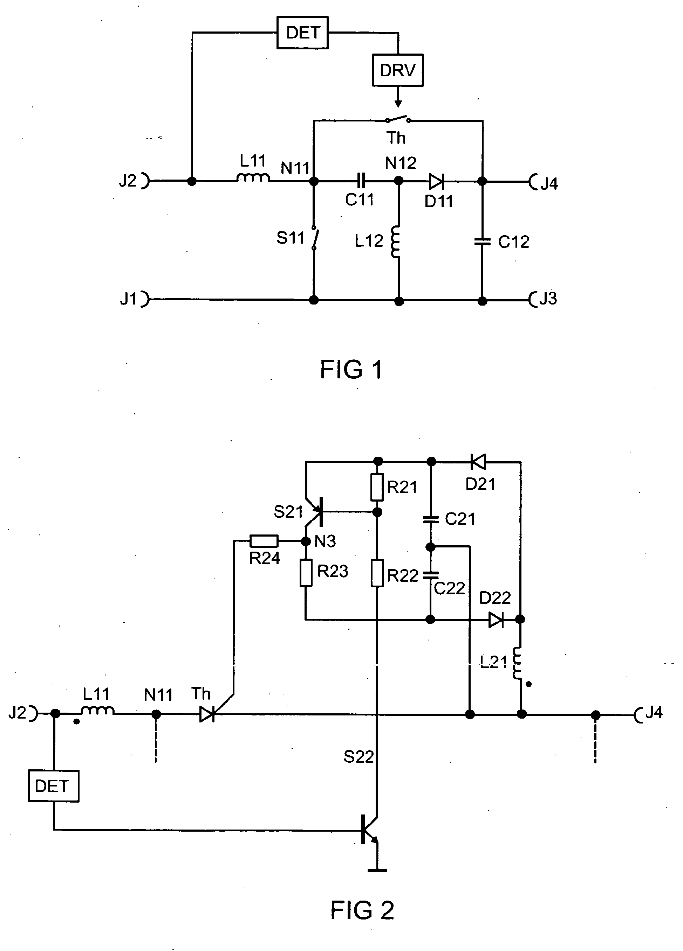

Figur 1 zeigt ein Ausführungsbeispiel für eine erfindungsgemäße Schaltungsanordnung. Für den getakteten Wandler wird im Ausführungsbeispiel ein SEPIC gewählt. Ein Fachmann kann jedoch die Erfindung auch auf andere Wandlertypen wie z. B. einen Hochsetzer (Boost-Konverter) anwenden.

Anschlüsse J1 und J2 stellen die Netz-Eingänge dar, an denen eine gleichgerichtete Netzspannung anschließbar ist. An Anschlüssen J3 und J4 kann die Schaltungsanordnung eine Betriebsgleichspannung bereitstellen. Ein Speicherkondensator C12 ist zwischen die Anschlüsse J3 und J4 geschaltet und dient neben der erfindungsgemäßen Funktion, die unten beschrieben wird, zum Puffern der Betriebsgleichspannung. Die Anschlüsse J1 und J 3 sind verbunden und bilden ein Bezugspotenzial.

Eine Speicherdrossel L11, ein Schalttransistor S11, ein zweiter Speicherkondensator C11, eine zweite Speicherdrossel L12 und eine Freilauf-Diode D11 bilden einen aus der Literatur bekannten SEPIC. Zwischen dem Netzanschluss J2 und dem Anschluss J4 sind in der angegebenen Reihenfolge die Speicherdrossel L11, der zweite Speicherkondensator C11 und die Freilaufdiode D11 in Serie geschaltet. Zwischen der Speicherdrossel L11 und dem zweiten Speicherkondensator C11 bildet sich ein erster Knoten N11 und zwischen dem Speicherkondensator C11 und der Freilaufdiode bildet sich ein zweiter Knoten N12. Der Schalttransistor S11 ist zwischen den ersten Knoten N11 und das Bezugspotenzial geschaltet. Die zweite Speicherdrossel L12 ist zwischen den zweiten Knoten N12 geschaltet. Die Funktionsweise des SEPIC ist für die vorliegende Erfindung unerheblich und wird deshalb nicht beschrieben.

Zwischen den ersten Knoten N11 und den Anschluss J4 ist ein Ableitschalter Th geschaltet. Der Ableitschalter Th liegt somit zwischen einem zweiten Arbeitsanschluss des Schalters S11 und einem zweiten Anschluss des Speicherkondensators C12.

Den Ableitschalter Th steuert eine Treiberschaltung DRV mit einem Schaltsignal, an einem Steueranschluss des Ableitschalters Th. Die Treiberschaltung DRV ist gekoppelt mit einer Detektorschaltung DET, die wiederum mit dem Netzanschluss J2 gekoppelt ist. Die Treiberschaltung DRV und die Detektorschaltung DET können zu einer Auswerteschaltung zusammengefasst werden.

Erfindungsgemäß ist die Auswerteschaltung so ausgelegt, dass sie den Ableitschalter Th schließt für den Fall, dass die Spannung oder der Spannungsanstieg zwischen den Anschlüssen J1 und J2 über einem gegebenen Grenzwert liegt. Die Aufgabe der Auswerteschaltung kann in die Detektion der Netzspannung und das Ansteuern des Ableitschalters aufgeteilt werden.

Die Detektion wird in Figur 1 durch die Detektorschaltung DET wahrgenommen. Zur Realisierung stehen dem Fachmann zahlreiche Schwellwertschaltungen zur Verfügung. Auch die Detektion eines Spannungsanstiegs ist dem Fachmann geläufig.

Beispielsweise kann dazu einer Schwellwertschaltung ein Hochpass vorgeschaltet werden. Neben der Detektion des Spannungswertes auch dessen Anstieg zu detektieren ist vorteilhaft, da dadurch bei schnellem Anstieg frühzeitig der Ableitschalter schließt. Die alleinige Detektion des Spannungswerts kann wegen nicht vermeidbarer Schaltzeilen dazu führen, dass der Ableitschalter erst schließt, wenn die Netzspannung bereits einen Wert erreicht hat, der zur Zerstörung des Schalttransistors S11 führt.

Die Treiberschaltung DRV wandelt die Information der Detektorschaltung DET in ein Schaltsignal um, das zur Ansteuerung des Ableitschalters Th geeignet ist. Da für den Ableitschalter Th prinzipiell alle elektronischen Schalter in Frage kommen, muss der Fachmann eine zum Typ des Ableitschalters Th passende Treiberschaltung DRV wählen.

Erreicht die Spannung oder der Spannungsanstieg am Anschluss J2 Werte, die zur Zerstörung des Schalters S 11 führen könnten, schaltet der Ableitschalter den Speicherkondensator C12 parallel zum zu schützenden Schalter S11. Die Energie dieser Netzüberspannung lädt damit den Speicherkondensator C12. Üblicherweise haben Speicherkondensatoren Werte im Bereich von einigen Mikrofarad. Die Energie, die transiente Netzüberspannungen üblicherweise aufweisen, führt am Speicherkondensator C12 nur zu einem Spannungsanstieg von einigen Volt, die keine Gefahr für den Schalttransistor S 11 darstellen. Wird für den Speicherkondensator C12 ein Elektrolytkondensator gewählt, so kann auch dessen bekannter Zenereffekt genutzt werden.

Vorteilhaft, wird für den Ableitschalter Th ein Thyristor eingesetzt, da bereits kostengünstige Thyristoren hohe Ströme tragen können. Auch die Eigenschaft eines Thyristors sich selbst zu löschen, kann vorteilhaft genutzt werden.

In Figur 2 ist ein Ausführungsbeispiel einer Treiberschaltung gezeigt, die dafür geeignet ist einen Thyristor anzusteuern, der für den Ableitschalter Th verwendet wird. Bei der Verwendung eines Thyristors muss darauf geachtet werden, dass er nicht durch eine bekannte, unerwünschte Über-Kopf-Zündung gezündet wird. Immer wenn der Schalttransistor S11 öffnet steigt die Spannung an der Anode des Thyristors schnell an und es besteht die Gefahr einer Über-Kopf-Zündung. Besonders hoch ist die Gefahr bei der Inbetriebnahme einer erfindungsgemäßen Schaltungsanordnung. Der Speicherkondensator C 12 am Ausgang des Spannungswandlers ist bei der Inbetriebnahme noch entladen womit die Ausgangsspannung Null ist. Damit ergibt sich eine hohe momentane Spannung zwischen Anode und Kathode des Thyristors und die Gefahr einer Über-Kopf-Zündung.

Um dies zu verhindern legt die Treiberschaltung gemäß Figur 2 am Gate des Thyristors Th bezüglich der Kathode des Thyristors Th immer dann eine negative Spannung an, falls ein Steuerschalter S22 geöffnet ist, d.h. wenn aufgrund fehlender Netzüberspannung keine Triggerung, des Thyristors Th gewünscht ist. Beim Steuerschalter S22 handelt es sich um einen Bipolartransistor, dessen Basis mit der Detektorschaltung DET gekoppelt ist. Wenn die Detektorschaltung eine Netzüberspannung registriert, gibt sie eine Signal an den Steuerschalter S22 ab, das diesen in den leitenden Zustand versetzt und damit die Triggerung des Thyristors Th auslöst. Liegt keine Netzüberspannung vor, liegt am Gate des Thyristors Th eine negative Spannung an,

Dies wird gemäß Figur 2 erreicht durch eine Hilfsdrossel L21, die mit ihrem ersten Anschluss galvanisch mit der Kathode des Thyristors Th gekoppelt ist, wobei die Hilfsdrossel L21 mit der Speicherdrossel L11 derart magnetisch gekoppelt ist, dass an ihrem zweiten Anschluss eine negative Schutz-Spannung bezüglich ihres ersten Anschlusses anliegt, falls an der Speicherdrossel L11 eine negative Spannung bezüglich der Eingangsklemme J2 anliegt.

Die negative Schutz-Spannung lädt über eine Diode D22 einen Kondensator C22. Die Spannung an C22 ist über eine Serienschaltung von Widerständen R23 und R24 zwischen Gate und Kathode des Thyristors geschaltet. Zwischen R23 und R24 bildet sich ein dritter Knoten N3.

Eine positive Spannung an der Hilfsdrossel lädt über eine Diode D21 einen Kondensator C21. Die Spannung an C21 wird über einen Hilfsschalter S21, den Knoten N3 und R24 zwischen Gate und Kathode des Thyristors Th geschaltet. Solange S21 geöffnet ist liegt also am Gate eine negative Spannung an, wodurch ein Über-Kopf-Zünden vermieden wird. Sobald S21 schließt wird der Thyristor Th durch die positive Spannung an C21 gezündet.

Im Ausführungsbeispiel nach Figur 2 wird der Hilfsschalter S21 von einem PNP Bipolartransistor gebildet, der mit dem Emitter an C21 und mit dem Kollektor mit dem dritten Knoten N3 gekoppelt ist. Zwischen Basis und Emitter ist ein Widerstand R21 geschaltet. Der Steuerschalter S22 ist ein NPN Bipolartransistor der mit seinem Emitter am Bezugspotenzial M angeschlossen ist. Der Kollektor von S22 ist über einen Widerstand R22 mit der Basis von S21 verbunden. Die Basis von S22 ist mit Detektorschaltung DET verbunden.

Solange die Detektorschaltung DET kein Signal abgibt, ist S22 geöffnet, womit auch S21 geöffnet ist und am Gate des Thyristors eine negative Spannung anliegt. Es liegtkeine Netzüberspannung vor.

Liegt eine Netzüberspannung vor, schaltet die Detektorschaltung DET den Steuerschalter S22 durch, wodurch auch S21 durchschaltet und der Thyristor zündet. Der Schalter S11 des Wandlers ist geschützt.

Die Schaltungsanordnung bestehend aus R21, R22, R23, R24, S22 und S21 ist in der Literatur als Boostrap-Schaltung bekannt. Diese Schaltung findet Verwendung, wenn ein Schalter, dessen Ansteuersignal nicht massebezogen ist, wie im vorliegenden Fall das Gate des Thyristors, durch ein massebezogenes Signal einer Steuereinrichtung geschaltet werden soll. Dieses massebezogenes Signal kommt im vorliegenden Fall von der Detektorschaltung DET. Die Boostrap-Schaltung in Figur 2 ist nur beispielhaft zu verstehen. In gleicher Weise können auch andere dem Fachmann geläufige Boostrap-Schaltungen Verwendung finden. Beispielsweise kann die Boostrap-Schaltung mit Feldeffekt-Transistoren aufgebaut sein oder die Potenzialdifferenz, die im Beispiel durch S22 überbrückt wird kann durch einen Übertrager überbrückt sein.

Wesentlich ist die Bereitstellung einer positiven und einer negativen Spannung an C21 und C22. Beliebig ist die Boostrap-Schaltung, die abhängig von der Detektorschaltung DET entweder die positive oder die negative Spannung auf das Gate des Thyristors schaltet.

Am ersten Knoten N11 und am Anschluss J4 wird der Wandler, beispielsweise der SEPIC aus Figur 1 angeschlossen. Dies ist in Figur 2 durch gestrichelte Linien angedeutet. Dabei entsprechen sich jeweils Knoten N11 und Anschluss J4 aus Figur 1 und Figur 2.

## Patentansprüche

1. Schaltungsanordnung zur Bereitstellung einer Betriebs-Gleichspannung aus einer Netzspannung mit
-- einem ersten (J1) und einem zweiten (J2) Netz-Eingang zum Anschluss einer gleichgerichteten Netzspannung,
-- einer getakteten Wandlerschaltung (L11, S11, C11, D11, L12) mit mindestens einem Schalttransistor (S11) mit einem ersten und einem zweiten Arbeitsanschluss, wobei der erste Arbeitsanschluss mit dem ersten Netz-Eingang (J 1) gekoppelt ist,
-- einem Speicherkondensator (C12), mit einem ersten und einem zweiten Anschluss, wobei der erste Anschluss des Speicherkondensators mit dem ersten Netz-Eingang (J1) gekoppelt ist,
-- einer Auswerteschaltung (DET, DRV), die die Spannung zwischen den NetzEingängen (J1, J2) derart auswertet, dass bei Überschreiten eines gegebenen Spannungswerts oder Spannungsanstiegs die Auswerteschaltung (DET, DRV) eine Schaltsignal abgibt,
wobei die Schaltungsanordnung **dadurch gekennzeichnet ist, dass**
sie einen Ableitschalter (Th) mit einem ersten Arbeitsanschluss, einem zweiten Arbeitsanschluss und einem Steueranschluss aufweist,
wobei der erste Arbeitsanschluss des Ableitschalters (Th) mit dem zweiten Arbeitsanschluss des Schalttransistors (S11) gekoppelt ist, der zweite Arbeitsanschluss des Ableitschalters (Th) mit dem zweiten Anschluss des Speicherkondensators (C12) gekoppelt ist und das Schaltsignal am Steueranschluss anliegt.

2. Schaltungsanordnung gemäß Anspruch 1, **dadurch gekennzeichnet, dass** es sich bei der getakteten Wandlerschaltung um einen SEPIC oder einen Boost-Wandler handelt.

3. Schaltungsanordnung gemäß einem der vorigen Ansprüche, **dadurch gekennzeichnet, dass** zwischen den zweiten Netz-Eingang (J2) und dem ersten Arbeitsanschluss des Ableitschalters (Th) eine Speicherdrossel (L11) geschaltet ist.

4. Schaltungsanordnung gemäß Anspruch 3,
**dadurch gekennzeichnet, dass**
der Ableitschalter (Th) einen Thyristor (Th) umfasst und die Auswerteschaltung eine Treiberschaltung (DRV) umfasst, die das Steuersignal am Gate des Thyristors (Th) bereit stellt,
wobei die Treiberschaltung (DRV) so ausgelegt ist, dass das Steuersignal in der Zeit negativ bezüglich der Kathode des Thyristors (Th)ist, in der die Treiberschaltung (DRV) den Thyristor nicht zündet.

5. Schaltungsanordnung gemäß Anspruch 4, **dadurch gekennzeichnet, dass**
die Treiberschaltung (DRV) folgende Merkmale aufweist:
-- eine Hilfsdrossel (L21), die mit ihrem ersten Anschluss mit der Kathode des Thyristors (Th) verbunden ist, wobei die Hilfsdrossel (L21) mit der Speicherdrossel (L11) derart magnetisch gekoppelt ist, dass an ihrem zweiten Anschluss eine negative Spannung bezüglich ihres ersten Anschlusses anliegt, falls an der Speicherdrossel (L11) eine negative Spannung bezüglich dem zweiten Netz-Eingang (J2) anliegt,
-- eine Serienschaltung, die parallel zur Hilfsdrossel (L21) geschaltet ist und aus einem ersten Hilfskondensator (C22) und einer ersten Hilfsdiode (D22) besteht, wobei die Kathode der ersten Hilfsdiode (D22) mit dem zweiten Anschluss der Hilfsdrossel (L21) verbunden ist und der Verbindungspunkt zwischen der ersten Hilfsdiode (D22) und dem ersten Hilfskondensator (C22) mit dem Gate des Thyristors (Th) gekoppelt ist,
-- eine Serienschaltung, die parallel zur Hilfsdrossel (L21) geschaltet ist und aus einem zweiten Hilfskondensator (C21) und einer zweiten Hilfsdiode (D21) besteht, wobei die Anode der zweiten Hilfsdiode (D21) mit dem zweiten Anschluss der Hilfsdrossel (L21) verbunden ist und der Verbindungspunkt zwischen der zweiten Hilfsdiode (D21) und dem zweiten Hilfskondensator (C21) über einen Hilfsschalter (S21) mit dem Gate des Thyristors (Th) gekoppelt ist, wobei eine Detektorschaltung (DET) ein Schließen des Hilfsschalters (S21) bewirkt, falls an den Netzeingängen (J1, J2) eine Netzüberspannung vorliegt.

6. Schaltungsanordnung gemäß einem der vorigen Ansprüche, **dadurch gekennzeichnet,**
**dass** der Speicherkondensator mit einem weiteren Wandler gekoppelt ist, der zum Betrieb einer Lampe geeignet ist.

7. Betriebsgerät zum Betrieb einer Lampe **gekennzeichnet durch** eine Schaltungsanordnung gemäß einem der vorigen Ansprüche.

## Claims

1. Circuit arrangement for providing a DC operating voltage from a mains voltage with
-- a first mains input (J1) and a second mains input (J2) for connecting a rectified mains voltage,
-- a clocked converter circuit (L11, S11, C11, D11, L12) with at least one switching transistor (S11) with a first and a second working terminal, the first working terminal being coupled to the first mains input (J1),
-- a storage capacitor (C12), with a first and a second terminal, the first terminal of the storage capacitor being coupled to the first mains input (J1),
-- an evaluation circuit (DET, DRV), which evaluates the voltage between the mains inputs (J1, J2) in such a way that, when a given voltage value or voltage rise is exceeded, the evaluation circuit (DET, DRV) emits a switching signal,
the switching arrangement being **characterized in that**
it has a dissipating switch (Th) with a first working terminal, a second working terminal and a control terminal,
the first working terminal of the dissipating switch (Th) being coupled to the second working terminal of the switching transistor (S11), the second working terminal of the dissipating switch (Th) being coupled to the second terminal of the storage capacitor (C12), and the switching signal being present at the control terminal.

2. Circuit arrangement according to Claim 1, **characterized in that** the clocked converter circuit is a SEPIC or a boost converter.

3. Circuit arrangement according to one of the preceding claims, **characterized in that** a storage inductor (L11) is connected between the second mains input (J2) and the first working terminal of the dissipating switch (Th).

4. Circuit arrangement according to Claim 3,
**characterized in that**
the dissipating switch (Th) comprises a thyristor (Th), and the evaluation circuit comprises a driver circuit (DRV), which provides the control signal at the gate of the thyristor (Th),
the driver circuit (DRV) being designed in such a way that the control signal is negative with respect to the cathode of the thyristor (Th) in the time in which the driver circuit (DRV) is not triggering the thyristor.

5. Circuit arrangement according to Claim 4, **characterized in that**
the driver circuit (DRV) has the following features:
-- an auxiliary inductor (L21), which is connected with its first terminal to the cathode of the thyristor (Th), the auxiliary inductor (L21) being magnetically coupled to the storage inductor (L11) in such a way that there is a negative voltage with respect to its first terminal at its second terminal if a negative voltage with respect to the second mains input (J2) is present at the storage inductor (L11),
-- a series circuit, which is connected in parallel with the auxiliary inductor (L21) and comprises a first auxiliary capacitor (C22) and a first auxiliary diode (D22), the cathode of the first auxiliary diode (D22) being connected to the second terminal of the auxiliary inductor (L21) and the node between the first auxiliary diode (D22) and the first auxiliary capacitor (C22) being coupled to the gate of the thyristor (Th),
-- a series circuit, which is connected in parallel with the auxiliary inductor (L21) and comprises a second auxiliary capacitor (C21) and a second auxiliary diode (D21), the anode of the second auxiliary diode (D21) being connected to the second terminal of the auxiliary inductor (L21), and the node between the second auxiliary diode (D21) and the second auxiliary capacitor (C21) being coupled to the gate of the thyristor (Th) via an auxiliary switch (S21), a detector circuit (DET) causing the auxiliary switch (S21) to close if a mains overvoltage is present at the mains inputs (J1, J2).

6. Circuit arrangement according to one of the preceding claims, **characterized**
**in that** the storage capacitor is coupled to a further converter, which is suitable for operating a lamp.

7. Operating device for operating a lamp, **characterized by** a circuit arrangement according to one of the preceding claims.

## Revendications

1. Montage pour fournir une tension continue de fonctionnement à partir d'une tension de secteur comprenant :
- une première ( J1 ) et une deuxième ( J2 ) entrées de secteur pour l'application d'une tension de secteur redressée,
- un circuit ( L11, S11, C11, D11, L12 ) convertisseur cadencé ayant au moins un transistor ( S11 ) de commutation ayant une première et une deuxième bornes de travail, la première borne de travail étant reliée à la première entrée ( J1 ) de secteur,
- un condensateur ( C12 ) accumulateur ayant une première et une deuxième bornes, la première borne du condensateur accumulateur étant reliée à la première entrée ( J1 ) de réseau,
- un circuit ( DET, DRV ) d'exploitation qui exploite la tension entre les entrées ( J1, J2 ) de réseau de façon à ce que, en cas de dépassement d'une valeur de tension ou d'une élévation de tension donnée, le circuit ( DET, DRV ) d'évaluation émette un signal de commutation, le montage étant **caractérisé en ce que**
il a un commutateur ( Th ) de dérivation ayant une première borne de travail, une deuxième borne de travail et une borne de commande,
dans lequel la première borne de travail du commutateur ( Th ) de dérivation est reliée à la deuxième borne de travail du transistor ( S11 ) de commutation, la deuxième borne de travail du commutateur ( Th ) de dérivation est reliée à la deuxième borne du condensateur ( C12 ) accumulateur et le signal de commutation est appliqué à la borne de commande.

2. Montage suivant la revendication 1, **caractérisé en ce que** le circuit convertisseur cadencé est un SEPIC ou un convertisseur Boost.

3. Montage suivant l'une des revendications précédentes, **caractérisé en ce qu'**une bobine ( L11 ) accumulatrice est montée entre la deuxième entrée ( J2 ) de secteur et la première borne de travail du commutateur ( Th ) de dérivation.

4. Montage suivant la revendication 3, **caractérisé en ce que** le commutateur ( Th ) de dérivation comprend un thyristor ( Th ) et le circuit d'exploitation comprend un circuit ( DRV ) d'attaque, qui fournit le signal de commande à la grille du thyristor ( Th ),
le circuit ( DRV ) d'attaque étant tel que le signal de commande est négatif par rapport à la cathode du thyristor ( Th ) pendant le temps pendant lequel le circuit ( DRV ) d'attaque n'amorce pas le thyristor.

5. Montage suivant la revendication 4, **caractérisé en ce que** le circuit ( DRV ) d'attaque a les caractéristiques suivantes :
- une bobine ( L21 ) auxiliaire qui est reliée par sa première borne à la cathode du thyristor ( Th ), la bobine ( L21 ) auxiliaire étant couplée magnétiquement à la bobine ( L11 ) d'accumulation de manière à ce qu'une tension négative par rapport à sa première borne s'applique à sa deuxième borne si une tension négative, par rapport à l'entrée ( J2 ) de secteur, s'applique à la bobine ( L11 ) d'accumulation,
- un circuit série qui est monté en parallèle à la bobine ( L21 ) auxiliaire et qui est composé d'un premier condensateur ( C22 ) auxiliaire et d'une première diode ( D22 ) auxiliaire, la cathode de la première diode ( D22 ) auxiliaire étant reliée à la deuxième borne de la bobine ( L21 ) auxiliaire et le point de liaison entre la première diode ( D22 ) auxiliaire et le premier condensateur ( C22 ) auxiliaire étant relié à la grille du thyristor ( Th ),
- un circuit série qui est monté en parallèle à la bobine ( L21 ) auxiliaire et qui est composé d'un deuxième condensateur ( C21 ) auxiliaire et d'une deuxième diode ( D21 ) auxiliaire, l'anode de la deuxième diode ( D21 ) auxiliaire étant reliée à la deuxième borne de la bobine ( L21 ) auxiliaire et le point de liaison entre la deuxième diode ( D21 ) auxiliaire et le deuxième condensateur ( C21 ) auxiliaire étant relié à la grille du thyristor ( Th ) par un commutateur ( S21 ) auxiliaire, un circuit ( DET ) formant détecteur provoquant une fermeture du commutateur ( S21 ) auxiliaire s'il y a une surtension du secteur aux entrées ( J1, J2 ) de secteur.

6. Montage suivant l'une des revendications précédentes, **caractérisé**
**en ce que** le condensateur accumulateur est relié à un autre convertisseur qui est propre à faire fonctionner une lampe.

7. Appareil pour faire fonctionner une lampe, **caractérisé par** un montage suivant l'une des revendications précédentes.
